## Europäisches Patentamt

(19) **European Patent Office**

**Office européen des brevets**

(11) Veröffentlichungsnummer: **0 230 215**
**B1**

(12) # EUROPÄISCHE PATENTSCHRIFT

(45) Veröffentlichungstag der Patentschrift:
14.03.90

(51) Int. Cl.⁴: **H05B 6/06**

(21) Anmeldenummer: **86890336.0**

(22) Anmeldetag: **10.12.86**

(54) Schalteinrichtung für Induktionsöfen.

(30) Priorität: **21.01.86 AT 135/86**

(43) Veröffentlichungstag der Anmeldung:
**29.07.87 Patentblatt 87/31**

(45) Bekanntmachung des Hinweises auf die Patenterteilung:
**14.03.90 Patentblatt 90/11**

(84) Benannte Vertragsstaaten:
**BE CH DE FR GB IT LI LU NL SE**

(56) Entgegenhaltungen:
**CH-A- 642 505**
**DD-A- 208 446**
**DE-A- 2 435 865**
**GB-A- 2 004 711**

(73) Patentinhaber: **VOEST-ALPINE INDUSTRIEANLAGENBAU GESELLSCHAFT m b.H.,**
**Turmstrasse 44, A-4020 Linz(AT)**

(72) Erfinder: **Arif, Serwan, Dipl.-Ing., Kopernikusstrasse 22,**
**A-4020 Linz(AT)**
Erfinder: **Moshammer, Karl, Lokalbahnweg 8,**
**A-4060 Leonding(AT)**

(74) Vertreter: **Matschnig, Franz, Dipl.-Ing.,**
**Siebensterngasse 54 Postfach 452, A-1071 Wien(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Verfahren zum Anschalten eines Induktionsofens an eine Wechselspannung mit Netzfrequenz und Schaltungsanordnung zur Durchführung des Verfahrens.

Der Erfindung bezieht sich auf ein Verfahren zum Anschalten eines Induktionsofens, insbesondere eines Induktionsofens zum Erwärmen von Brammen und Knüppeln, an eine Wechselspannung mit Netzfrequenz, bei welchem die Induktionsspule des Ofens zunächst über einen Vorwiderstand und sodann direkt an die Wechselspannung gelegt wird, sowie auf eine Schaltungsanordnung zur Durchführung des Verfahrens.

Induktionsöfen zum induktiven Erwärmen großer Werkstücke, wie z.B. Brammen, werden mit Netzfrequenz (in Europa üblicherweise 50 Hz) betrieben. Die Induktionsspule, der ein Ausgleichskondensator parallelgeschaltet ist, wird über einen mechanischen Schalter, insbesondere einen Schütz, an die Sekundärwicklung eines Netztransformators gelegt. Wegen der hohen Schaltleistung bzw. Schaltstromstärke bis zu mehreren 1000 A, z.B. 10 kA bei Spannungen von 100 V bis 2000 V sind stark dimensionierte und entsprechend teure Schütze erforderlich, um den Schaltverschleiß in erträglichen Grenzen zu halten. Es ist auch bekannt geworden, zwei parallel geschaltete Schütze nacheinander zu schalten, wobei der zuerst betätigte Schütz über einen Vorwiderstand mit der Netzspannung bzw. dem Transformator verbunden ist. Auf diese Weise wird nicht sofort die volle Stromstärke geschaltet, doch hängt der Verschleiß sehr davon ab, zu welchem Zeitpunkt des Spannungs- bzw. Stromverlaufes (Maximum, Nulldurchgang) geschaltet wird.

Um einen oftmaligen, durch den Austausch abgenützter Schalter bedingten Stillstand des Ofens zu vermeiden, versucht man daher, möglichst selten zu schalten. Andererseits muß beim Anwärmen von Brammen oder Knüppeln vor dem Walzen eine gleichmäßige Temperaturverteilung erzielt werden. Dazu werden die Brammen entweder äußerlich weit über ihre Walztemperatur erhitzt und es wird mit dem Walzen gewartet, bis eine gewisse Temperaturverteilung eingetreten ist, oder es werden zwei verschieden dimensionierte Induktionsspulen verwendet. Die erstgenannte Lösung ist wegen der Überhitzung der Werkstücke metallurgisch nachteilig, die zweitgenannte Lösung erfordert eine teure Ofenkonstruktion. Die CH-PS 642 505 offenbart beispielsweise eine Einrichtung, bei welcher wenigstens zwei voneinander getrennt anspeisbare Wicklungsabschnitte oder wenigstens zwei Induktoren vorgesehen sind. Die in der DD-PS 208 446 beschriebene Schaltungsanordnung und das Verfahren gehen auch von mehreren Einzelspulen bzw. Spulengruppen aus. Wünschenswert wäre daher eine Anlage bei welcher der Ofen beliebig oft ein und ausgeschaltet werden könnte, um auf diese Weise die Temperatur des Werkstückes zu steuern, welche jedoch nicht grundsätzlich auf einer mehrspuligen Anordnung und dem damit verbundenen Mehraufwand beruht.

Dieses Ziel läßt sich mit einem Verfahren der eingangs genannten Art erreichen, bei welchem erfindungsgemäß die Wechselspannung dem Induktionsofen über zwei gegenpolig geschaltete gesteuerte Haupt-Ventile direkt und über mindestens ein weiteres gesteuertes Start-Ventil unter Zwischenschaltung eines Vorwiderstandes zugeführt wird, wobei beim Anschalten zum Leiten während einer ersten Halbwelle der Netzspannung zunächst das Start-Ventil bzw. während der folgenden Halbwellen weitere Start-Ventile und hierauf während des folgenden Betriebes die beiden gegenpolig geschalteten Haupt-Ventile ohne Vorwiderstand abwechselnd während aller folgender Halbwellen gezündet werden.

Dank der Erfindung ist es unter Verwendung von gesteuerten Halbleiterschaltern, z.B. Thyristoren, möglich, die Induktionsspule eines Induktionsofens beliebig oft an eine Spannungsquelle mit Netzfrequenz zu schalten, wodurch sich die Temperatur bzw. Temperaturverteilung am Werkstück bequem einstellen läßt. Die Verwendung von Thyristorenschaltern, insbesondere in einer antiparallelen Schaltungsanordnung entspricht dem Stand der Technik und wird in den oben angeführten Dokumenten sowie in anderen, auf diesem Fachgebiet bekannten, wie beispielsweise in der DE-OS 2 435 865 oder im Dokument GB 2 004 711 vorgeschlagen. Die vorliegende Erfindung sieht jedoch weiterführend mindestens ein weiteres gesteuertes Start-Ventil unter Zwischenschaltung eines Vorwiderstandes vor. Daher müssen die Hauptventile nicht auf die volle Schaltleistung (Spannungs- und Stromspitzen) dimensioniert werden. Da der Vorwiderstand und das oder die Start-Ventile nur beim Einschalten und hier nur für je eine Halbwelle Strom führen, d.h. bei 50 Hz 10 ms, können sie entsprechend schwach dimensioniert werden.

Als besonders zweckmäßig hat es sich in der Praxis erwiesen, wenn die Wechselspannung der Induktionsspule während der ersten beiden Halbwellen über zwei gegenpolig geschaltete Start-Ventile mit einem gemeinsamen Vorwiderstand zugeführt wird.

Bei einer Schaltungsanordnung zum Anschalten eines Induktiuonsofens, insbesondere eines Induktionsofens zum Erwärmen von Knüppeln und Brammen, an eine Spannung mit Netzfrequenz, bei welcher die Induktionsspule des Ofens, der vorzugsweise ein Ausgleichskondensator parallelgeschaltet ist, über nacheinander betätigbare Schalter zunächst über einen Vorwiderstand und sodann direkt an die Netzspannung legbar ist, ist zur Durchführung des erfindungsgemäßen Verfahrens vorgesehen, daß der Schalter aus der Parallelschaltung von mindestens drei gesteuerten Ventilen (V1, V2, V3) besteht, von denen zwei Haupt-Ventile gegenpolig geschaltet sind und zumindest ein weiteres StartVentil eine Vorwiderstand aufweist und den Ventilen eine mit der Netzfrequenz synchronisierte Steuerschaltung zur Zuführung von Zünd- bzw. Schaltimpulsen zugeordnet ist, wobei beim Anschalten dem StartVentil bzw. den Start-Ventilen zum Leiten während einer ersten Halbwelle der Netzspannung bzw. während der ersten Halbwellen und hierauf den Haupt-Ventilen zum Leiten während aller folgenden Halbwellen ein Zündimpuls bzw. Zündimpulse zuführbar ist bzw. sind.

Eine vorteilhafte Weiterbildung der Erfindung zeichnet sich dadurch aus, daß die Start-Ventile einen gemeinsamen Vorwiderstand aufweisen.

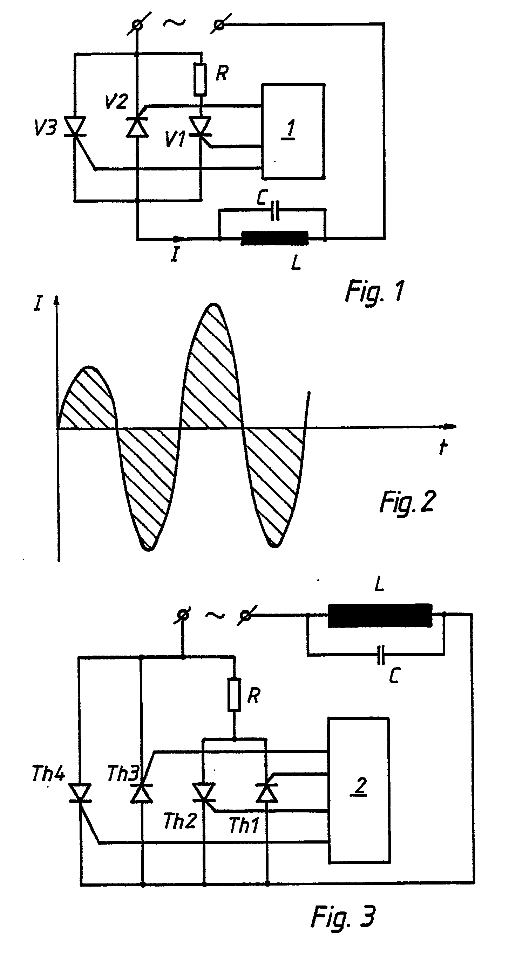

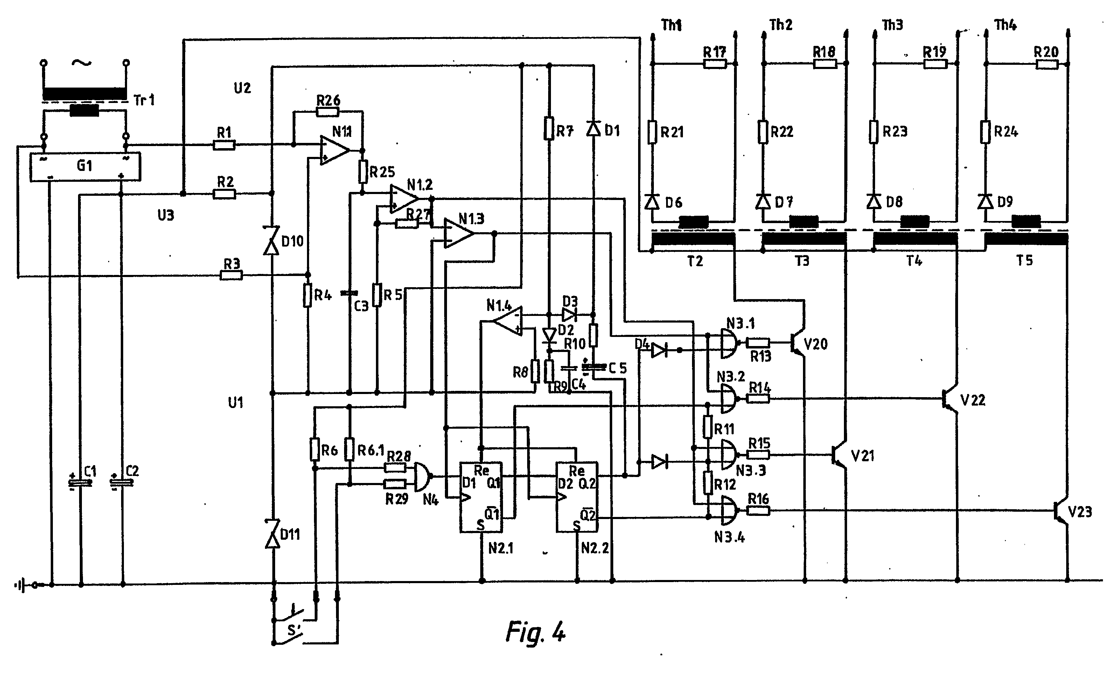

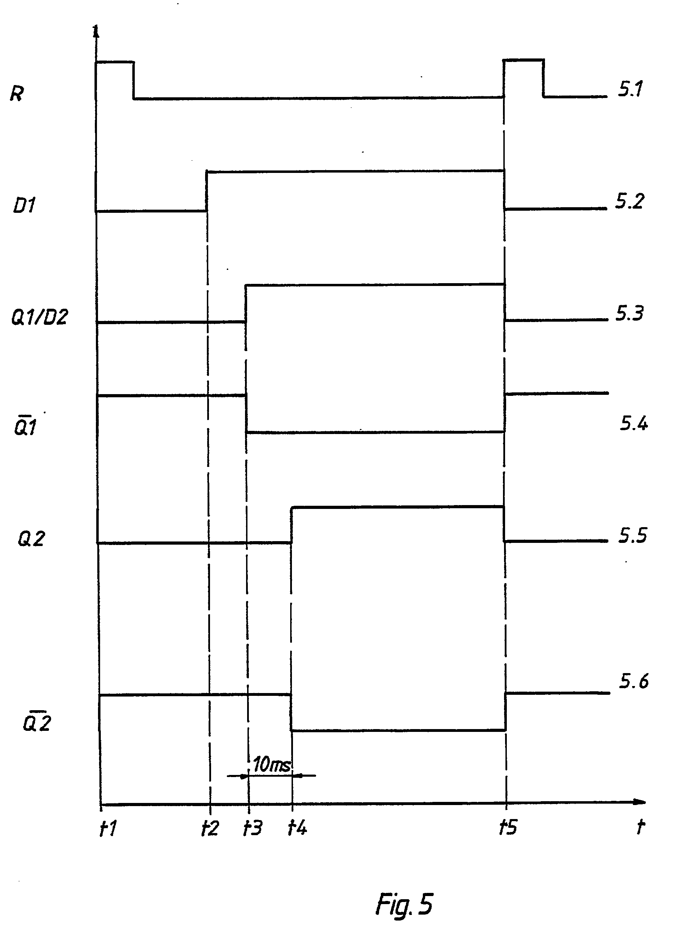

Die Erfindung samt ihren weiteren Vorteilen und Merkmalen ist im folgenden an Hand beispielsweiser Ausführungsformen näher erläutert, die in der Zeichnung veranschaulicht sind. In dieser zeigen Fig.1 das Prinzipschaltbild einer Schaltungsanordnung nach der Erfindung, Fig.2 an Hand des Stromverlaufes durch die Induktionsspule die Zuordnung der Ventile aus Fig.1 zu den einzelnen Halbwellen, Fig.3 das Prinzipschaltbild einer weiteren Schaltungsanordnung nach der Erfindung, Fig.4 das Schaltbild einer Steuerschaltung zur Ansteuerung der Ventile in Fig.3 und Fig.5 in einem Diagramm den zeitlichen Verlauf einiger wesentlicher Signale der Schaltung nach Fig.4.

Gemäß Fig.1 ist die Induktionsspule L eines Induktionsofens zum Erwärmen von Brammen und Knüppeln über die Parallelschaltung dreier Thyristoren V1, V2, V3 an eine Wechselspannung geschaltet, im allgemeinen an die Sekundärseite eines nicht gezeigten Netztransformators, der eine Spannung von z.B. 500 V bei 50 Hz abgibt. Einer der Thyristoren weist einen Vorwiderstand R auf. Zur Ansteuerung aller frei Thyristoren ist eine Steuerschaltung 1 vorgesehen. Parallel zu der Induktionsspule L ist ein Ausgleichskondensator C geschaltet, um den Blindleistungsanteil so gering wie möglich zu halten.

Erfindungsgemäß wird beim Anschalten zunächst der Start-Thyristor V1 gezündet, der während einer ersten Halbwelle der Netzspannung leitet. Es fließt ein entsprechend dem Vorwiderstand R reduzierter Strom. Hierauf wird der Haupt-Thyristor V2 gezündet, der während der folgenden, gemäß Fig.2 negativen Halbwelle leitet. Daraufhin wird der andere Haupt-Thyristor V3 gezündet, der nun während der folgenden, positiven Halbwelle leitet, daraufhin wieder der Haupt - Thyristor V2 u.s.f. Dies bedeutet, daß bloß während einer ersten Halbwelle d.h. bei 50 Hz während 10 ms, der Start-Thyristor V1 leitet, daraufhin im weiteren Betrieb abwechselnd die Haupt-Thyristoren V2 und V3.

Dank dem Verfahren und der Schaltungsanordnung nach der Erfindung können die Haupt-Thyristoren schwächer dimensioniert werden als ohne Verwendung eines Start-Thyristors mit Vorwiderstand. Der Induktionsofen kann verschleißlos beliebig oft eingeschaltet werden, wodurch die Qualität der Werkstücke positiv beeinflußt wird. Da der Start-Thyristor V1 nur während einer einzigen Halbwelle leitet, treten auch bei schwacher Dimensionierung des Start-Thyristors V1 und des Vorwiderstandes R keine thermischen Probleme auf.

Eine modifizierte Ausführungsform ist der Fig.3 zu entnehmen. Hier sind zwei Start-Thyristoren Th1, Th2 und zwei Haupt-Thyristoren Th3, Th4 parallel geschaltet, wobei die beiden Start-Thyristoren Th1, Th2 einen gemeinsamen Vorwiderstand R besitzen. Zum Anschalten wird zunächst einer der beiden Start-Thyristoren gezündet und leitet während einer ersten Halbwelle der Netzspannung. Sodann wird der andere Start-Thyristor gezündet, der während der folgenden Halbwelle leitet. Nach den ersten beiden Halbwellen werden die Haupt-Thyristoren Th3 und Th4 abwechselnd gezündet und sorgen somit im folgenden Betrieb für die Stromversorgung der Induktionsspule L.

Es sei an dieser Stelle erwähnt, daß bei Verwendung von zwei Start-Thyristoren bzw. Start-Ventilen auch je ein Vorwiderstand verwendet werden kann, wobei der Vorwiderstand des während der ersten Halbwelle leitenden Start-Ventils einen größeren Wert aufweisen kann, als jener des Start-Ventils, das während der zweiten Halbwelle leitet. Hiedurch wird ein noch "weicheres" Einschalten ermöglicht. Denkbar ist auch die Verwendung von mehr als zwei Start-Ventilen, etwa von vier Start-Ventilen, die dann so gezündet werden, daß sie während der ersten, z.B. der ersten vier, Halbwellen leiten.

Eine mögliche Ausführungsform einer Steuerschaltung für die Ansteuerung der vier Thyristoren nach Fig.3 ist in Fig.4 dargestellt und im folgenden erläutert. Es versteht sich jedoch, daß auch andere Schaltungen denkbar sind, die ein Zünden der Start-Thyristoren bzw. Start-Ventile während der ersten beiden Halbwellen und das darauffolgende, abwechselnde Zünden der Haupt-Thyristoren bzw. Haupt-Ventile gewährleisten.

Vin Netztransformator Tr, ein Gleichrichter G1, Siebkondensatoren C1, C2 und zwei Zenerdioden D10, D11 mit einem Vorwiderstand R2 sorgen für eine unstabilisierte (U3) und zwei stabilisierte (U1, U2) Versorgungsspanungen (U2 = 2 U1). Über Widerstände R1 und R3 wird die Synchronisierspannung der Sekundärwicklung des Netztransformators entnommen und den beiden Eingängen eines Operationsverstärkers N1.1 zugeführt, der im Gegenkopplungszweig einen Widerstand R26 aufweist und dessen nicht invertierender Eingang über einen Widerstand R4 an der Spannung U1 liegt. Der Ausgang des Verstärkers N1.1 ist über einen Widerstand R 25 mit den invertierenden Eingang eines Operationsverstärkers N 1.2 verbunden. Dieser Eingang liegt über einem Kondensator C3 an der Spannung U1. Der nicht invertierende Eingang liegt über einem Widerstand R5 an dieser Spannung. Im Rückkopplungszweig liegt ein Widerstand R 27. Der Ausgang dieses Verstärkers N 1.2 ist mit dem invertierenden Eingang eines weiteren Operationsverstärkers N 1.3 verbunden, dessen nichtinvertierender Eingang an der Spannung U1 liegt. Am Ausgang des Verstärkers N. 1.2 liegt eine rechteckförmige Impulsfolge, die bezüglich der Netzspannung um 90° phasenverschoben ist, am Ausgang des Verstärkers N 1.3 liegt eine demgegenüber um 180° phasenverschobene Impulsfolge. Beide Impulsfolgen dienen zum wechselseitigen Zünden der Thyristoren.

Der Ausgang des Verstärkers N 1.2 ist je mit einem Eingang eines NOR-Gatters N 3.3 bzw. N 3.4, der Ausgang des Verstärkers N 1.3 entsprechend mit je einem Eingang eines NOR-Gatters N 3.1 bzw. N 3.2 verbunden. Diese NOR-Gatter steuern über Widerstände R 13, R 14, R 15, R 16 Transistoren V 20, V 21, V 22, V 23, die mit ihrer Kollektor-Emitter Strecke je in Serie mit der Primärwicklung von Zündübertragern Tr 2, Tr 3, Tr 4, Tr 5 an der ungeregelten Gleichspannung U 3 liegen. Die Sekundärwicklungen sind über je eine Diode D 6, D 7, D 8, D 9 und einem mit dieser in Serie liegenden Widerstand R 21, R 22, R 23, R 24 zu den mit je einem Widerstand R 17, R 18, R 19, R 20 überbrückten Klemmen geführt, an welchen die Zündimpulse für die vier Thyristoren Th 1, Th 2, Th 3, Th 4 liegen. Bei Verwendung handelsüblicher Zündübertrager-Bausteine kann die Beschaltung der Übertrager je nach Hersteller verschieden sein.

Es sind weiters zwei D-Flipflops N 2.1, N 2.2 vorgesehen, deren Takteingänge mit dem Ausgang des Operationsverstärkers N 1.3 verbunden sind. Die Reset-Eingänge Re beider D-Flipflops sind mit dem Ausgang eines Operationsverstärkers N 1.4 verbunden, dessen invertierender Eingang über einen Widerstand R 7 an der Spannung U 2 und über die Serienschaltung einer Diode D 2 mit einem Parallel-RC-Glied R 9, C 4 an Masse liegt. Der invertierende Eingang ist weiters über eine Diode D 3, einen Widerstand R 10 und einen Kondensator C 5 mit dem Ausgang Q 2 des zweiten D-Flipflops N 2.2 verbunden. Der Verbindungspunkt der Diode D 3 und des Widerstandes R 10 liegt über eine Diode D 1 an der Spannung U2. Der nicht invertierende Eingang des Operationsverstärkers N 1.4 liegt über einen Widerstand R 8 an der Spannung U 1.

Der Dateneingang D 1 des ersten D-Flipflops N 2.1 liegt am Ausgang eines NAND-Gatters N 4, dessen beide Eingänge je über einen Spannungsteiler R 28 + R 6 bzw. R 29 + R 6.1 an der Spannung U 2 liegen, wobei die Teilerpunkte über einen Doppelschalter S an Masse legbar sind. Der Ausgang Q 1 des ersten Flipflops N 2.1 ist mit dem Dateneingang D 2 des zweiten Flipflops N 2.2 verbunden. Der Ausgang Q 1 des ersten Flipflops N 2.1 ist direkt mit dem zweiten Eingang des NOR-Gatters N 3.2 und über Widerstände R 11 bzw. R 12 mit den zweiten Eingängen der NOR-Gatter N 3.3 bzw. N 3.4 verbunden. Der Ausgang Q 2 des zweiten D-Flipflops N 2.2 ist über je eine Diode D 4 bzw. D 5 mit dem zweiten Eingang des NOR-Gatters N 3.1 bzw. N 3.3 verbunden und der Ausgang Q 2 des zweiten Flipflops N 2.2 ist an den zweiten Eingang des NOR-Gatters N 3.4 gelegt.

Die Arbeitsweise der Schaltung ist im folgenden kurz erläutert. Nach dem Einschalten der Betriebsspannung (Zeitpunkt t 1) wird mittels des Operationsverstärkers N 1.3 und dessen Beschaltung automatisch ein Spannungsimpuls erzeugt (Diagramm 5.1), der über die Reset-Eingänge Re die beiden D-Flipflops N 2.1 und N 2.2 in ihren Ausgangszustand versetzt.

Die an den ersten Eingängen der NOR-Gatter N 3.1, N 3.2, N 3.3, N 3.4 anliegenden Impulse bewirken keine Ausgangssignale, solange an den zweiten Eingängen ein H-Signal liegt (Diagramme 5.4 und 5.6). Somit sind auch alle vier Transistoren V 20, V 21, V 22, V 23 gesperrt.

Ein Schließen des Schalters S ( zum Zeitpunkt t 2 ) bewirkt über das NAND-Gatters N 4 und die mittels der D-Flipflops aufgebauten Verzögerungsschaltung, daß an den zweiten Eingängen der NOR-Gatter N 3.1 und N 3.3 während 20 ms ein L-Signal anliegt (Zeit t 2 bis t 4). Dadurch gelangt je ein Impuls von den Verstärkern N 1.3 bzw. N 1.2 an die Transistoren V 20 bzw. V 21, die nun über die Zündübertrager Tr 2 und Tr 3 zunächst den Start-Thyristor Th 1 und während der folgenden Halbwelle den Start-Thyristor Th 2 zünden. Während der ersten beiden Halbwellen liegt die Induktionsspule L somit über dem Vorwiderstand Re an der Netzspannung.

Nach dem Ablauf der Zeitverzögerung von 20 ms (zum Zeitpunkt t 4) liegt an den zweiten Eingängen der NOR-Gatter N 3.1 und N 3.3 ein H-Signal und an den zweiten Eingängen der NOR-Gatter N 3.2 und N 3.4 ein L-Signal. Dies bewirkt, daß die Thyristoren Th 1 und Th 2 wieder gesperrt werden, doch nun die Thyristoren Th 3 und Th 4 abwechselnd leiten und im folgenden Betrieb die Induktionsspule L an der vollen Betriebssspannung liegt.

Das Abschalten der Spule L erfolgt durch Öffnen des Schalters S (zum Zeitpunkt t 5). Hiedurch wird ein "Reset"-Impuls erzeugt, (Fig.5.1), der sämtliche Ausgänge der Flipflops in ihren Ausgangszustand versetzt, wodurch alle Thyristoren gesperrt werden.

Wenngleich im vorliegenden Ausführungsbeispiel von Thyristoren gesprochen wird, versteht es sich, daß auch andere gesteuerte Ventile entsprechender Strom- und Spannungsfestigkeit verwendet und auch mittels anderer Steuerschaltungen nach dem erfindungsgemäßen Verfahren angesteuert werden können. Die Erfindung ist auch bei Induktionsschmelzöfen mit Vorteil anwendbar.

## Patentansprüche

1. Verfahren zum Anschalten eines Induktionsofens, insbesondere eines Induktionsofens zum Erwärmen von Brammen und Knüppeln, an eine Wechselspannung mit Netzfrequenz, bei welchem die Induktionsspule des Ofens über zwei gegenpolig geschaltete gesteuerte Haupt-Ventile direkt über einen Vorwiderstand und sodann direkt an die Wechselspannung gelegt wird, dadurch gekennzeichnet, daß die Wechselspannung dem Induktionsofen über mindestens ein weiteres gesteuertes Start-Ventil unter Zwischenschaltung eines Vorwiderstandes zugeführt wird, wobei beim Anschalten zum Leiten während einer ersten Halbwelle der Netzspannung zunächst das Start-Ventil bzw. während der folgenden Halbwellen weitere Start-Ventile und hierauf während des folgenden Betriebes die beiden gegenpolig geschalteten Haupt-Ventile ohne Vorwiderstand abwechselnd während aller folgenden Halbwellen gezündet werden.

2. Verfahren nach Anspruch 1, dadurch gekennzeichnet, daß die Wechselspannung der Induktionsspule während der ersten beiden Halbwellen über zwei gegenpolig geschaltete Start-Ventile mit einem gemeinsamen Vorwiderstand zugeführt wird.

3. Schaltungsanordnung zum Anschalten eines Induktionsofens, insbesondere eines Induktionsofens zum Erwärmen von Knüppeln und Brammen, an eine Spannung mit Netzfrequenz, bei welcher die Induktionsspule des Ofens, der vorzugsweise ein Ausgleichskondensator parallelgeschaltet ist, über nacheinander betätigbare zwei gegenpolig geschaltete Haupt-Ventile aufweisende Schalter zunächst über einen Vorwiderstand und sodann direkt an die Netzspannung legbar ist, zur Durchführung des Verfahrens nach Anspruch 1 oder 2, dadurch gekennzeichnet, daß die Schalter aus der Parallelschaltung von mindestens drei gesteuerten Ventilen (V1,V2,V3;u.Th1-Th4) bestehen, und zumindest ein weiteres Start-Ventil (V1; Th1, Th2) mit einen Vorwiderstand ( R ) aufweisen und den Ventilen eine mit der Netzfrequenz synchronisierte Steuerschaltung (1,2) zur Zuführung von Zünd- bzw. Schaltimpulsen zugeordnet ist, wobei beim Anschalten dem Start-Ventil (V1) bzw. den Start-Ventilen (Th1, Th2) zum Leiten während einer ersten Halbwelle der Netzspannung bzw. während der ersten Halbwellen und hierauf den Haupt-Ventilen (V2, V3, Th3, Th4) zum Leiten während aller folgenden Halbwellen ein Zündimpuls bzw. Zündimpulse zuführbar ist bzw. sind.

4. Schaltungsanordnung nach Anspruch 3,dadurch gekennzeichnet, daß die Start-Ventile (V1, Th1, Th2) einen gemeinsamen Vorwiderstand ( R ) aufweisen.

## Claims

1. Process for switching induction furnaces, particularly an induction furnace for heating slabs and billets to an alternating voltage at mains frequency, where the induction coil of the furnace is connected directly via two controlled main valves switched in antiphase via series resistor and then directly to the alternating voltage, characterised in that the alternating voltage is supplied to the induction furnace via at least a further controlled starting valve inserting a series resistor, whereby when switching on for conduction during a first half wave of the mains voltage the starting valve will in the first instance and during the following half waves other starting valves and then during the subsequent operation, the two main valves switched in antiphase are triggered alternately during all following half waves without series resistor.

2. Process as in claim 1, characterised in that the alternating voltage is applied to the induction coil during the first two half waves via two starting valves switched in antiphase with a common series resistor.

3. Circuit arrangement for switching an induction furnace, particularly an induction furnace for heating billets and slabs to a voltage at mains frequency where the induction coil of the furnace, which preferably is shunted by a smoothing capacitor can be connected to the mains voltage via two switches with main valves switched in antiphase which can be actuated sequentially in the first instance via a series resistor and then directly, in order to execute the process as in claim 1 or 2, characterised in that the switches consist of at least three controlled valves (V1, V2, V3; and Th 1– Th 4) connected in parallel and have at least a further starting valve (V1; Th 1, Th2) with a series resistor (R) and the valves are assigned a control circuit (1,2) synchronised with the mains frequency for feeding the triggering and switching pulses, whereby the starting valve (V1) or the starting valves (Th 1, Th 2) are switched on to conduct during a first half wave of the mains voltage or during the first half waves and following that, the main valves (V2, V3, Th 3, Th4) can be supplied a triggering pulse or triggering pulses for conducting during the following half waves.

4. Circuit arrangement as in claim 3, characterised in that the starting valves (V1, Th1, Th2) have a common series resistor (R).

## Revendications

1. Procédé de branchement d'un four à induction, en particulier d'un four à induction pour le chauffage de brames et de billettes, sur une tension alternative à la fréquence du secteur, dans lequel on branche la bobine d'induction du four par l'intermédiaire de deux valves principales commandées montées avec des polarités opposées, par l'intermédiaire d'une résistance chutrice, puis directement sur la tension alternative, caractérisé en ce qu'on amène la tension alternative au four à induction par l'intermédiaire d'au moins une autre valve de démarrage commandée avec intercalage d'une résistance chutrice lors du branchement pour la conduction, pendant une première demi-onde de la tension secteur, la valve de démarrage et respectivement pendant les demi-ondes suivantes d'autres valves de démarrage et ensuite, pendant le fonctionnement subséquent, les deux valves principales montées avec des polarités opposées étant amorcées sans résistance chutrice alternativement pendant toutes les demi-ondes suivantes.

2. Procédé selon la revendication 1, caractérisé en ce que la tension alternative est amenée à la bobine d'induction pendant les deux premières demi-ondes par l'intermédiaire de deux valves de démarrage montées avec des polarités opposées, avec une résistance chutrice commune.

3. Montage pour le branchement d'un four à induction, en particulier d'un four à induction pour le chauffage de billettes et de brames, sur une tension à la fréquence du secteur, dans lequel la bobine d'induction du four, sur laquelle, de préférence, un condensateur d'équilibrage est monté en parallèle, peut être branchée sur la tension secteur par l'intermédiaire de deux commutateurs comportant des valves principales montées avec des polarités opposées, actionnables successivement, d'abord par l'intermédiare d'une résistance chutrice, puis directement, pour mettre en œuvre le procédé selon la revendication 1 ou 2, caractérisé en ce que les commutateurs comprenant le montage en parallèle d'au moins trois valves commandées (Vl, V2, V3, et TH1–TH4), et comportent au moins une autre valve de démarrage (V1, TH1, TH2) avec une résistance chutrice (R) et en ce qu'il est rattaché aux valves un montage de commande (1, 2) synchronisé sur la fréquence du secteur, pour l'amenée d'impulsions d'amorçage ou de commutation, lors du branchement, une impulsion d'amorçage ou des impulsions d'amorçage pouvant être amenées à la valve de démarrage (V1) ou aux valves de démarrage (TH1, TH2) pour la conduction pendant une première demi-onde de la tension secteur ou pendant les premières demi-ondes, puis aux valves principales (V2, V3, TH3, TH4) pour la conduction pendant toutes les demi-ondes suivantes.

4. Montage selon la revendication 3, caractérisé en ce que les valves de démarrage (V1, TH1, TH2) comportent une résistance chutrice (R) commune.

Fig. 1

Fig. 2

Fig. 3

Fig. 4

Fig. 5